(19) Europäisches Patentamt
European Patent Office
Office européen des brevets

(11) **EP 3 833 082 A1**

(12) **EUROPEAN PATENT APPLICATION**
published in accordance with Art. 153(4) EPC

(43) Date of publication:
**09.06.2021 Bulletin 2021/23**

(51) Int Cl.:
***H04W 24/02*** (2009.01)

(21) Application number: **18930599.8**

(22) Date of filing: **24.08.2018**

(86) International application number:
**PCT/CN2018/102284**

(87) International publication number:
**WO 2020/037660 (27.02.2020 Gazette 2020/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(71) Applicant: **HUAWEI TECHNOLOGIES CO., LTD.
Shenzhen, Guangdong 518129 (CN)**

(72) Inventor: **YE, Maorong
Shenzhen, Guangdong 518129 (CN)**

(74) Representative: **Maiwald Patent- und
Rechtsanwaltsgesellschaft mbH
Elisenhof
Elisenstraße 3
80335 München (DE)**

(54) **DATA TRANSMISSION METHOD AND APPARATUS**

(57) This application provides a data transmission method and an apparatus. The method includes: receiving, by a terminal, a first message sent by a network device, where the first message carries first configuration information, the first configuration information indicates a resource location configured for a positioning reference signal PRS on a downlink resource, and a resource on the downlink resource other than the resource occupied by the PRS is used to carry to-be-demodulated data; and demodulating, by the terminal, the to-be-demodulated data based on the first configuration information, where when demodulating data carried on the downlink resource, the terminal skips the resource occupied by the PRS. According to embodiments of this application, a downlink rate can be increased.

```
┌─────────────────┐              ┌─────────────────┐
│  Network device │              │     Terminal    │
└─────────────────┘              └─────────────────┘
         │                                │
┌─────────────────┐                       │
│ S201. Determine to                      │
│ use a second mode                       │
└─────────────────┘                       │
         │                                │
         │   S202. First message          │
         │───────────────────────────────▶│
         │                                │
         │                    ┌───────────────────────────┐
         │                    │ S203. When data demodulation is
         │                    │ performed on a downlink resource,
         │                    │ remove a PRS based on first
         │                    │ configuration information, and
         │                    │ perform downlink demodulation
         │                    │ on to-be-demodulated data
         │                    └───────────────────────────┘
         │                                │
```

FIG. 5

**Description**

**TECHNICAL FIELD**

This application relates to the field of communications technologies, and in particular, to a data transmission method and an apparatus.

**BACKGROUND**

In the field of communications technologies, a downlink observed time difference of arrival (observed time difference of arrival, OTDOA) is used to locate a terminal by observing a time difference of arrival. The terminal may monitor a candidate cell and a reference cell, measure a time at which a positioning reference signal (position reference signal, PRS) arrives at the terminal from each cell, and calculate a value of a downlink observed time difference of arrival between a PRS signal sent by the candidate cell and a PRS signal sent by the reference cell. There may be a plurality of candidate cells, and correspondingly, a plurality of values of downlink observed time differences of arrival may be obtained. A location of the terminal may be determined based on the plurality of values of the downlink observed time differences of arrival.

In a narrowband internet of things (narrowband internet of thing, NB-IoT) scenario, a cell sends an NB-IoT positioning reference signal (NB-IoT position reference signal, NPRS) to a terminal. The NPRS may be transmitted in a downlink resource block, and occupies 1/6 of one subframe in frequency domain. The NPRS may be transmitted in two modes. In a first mode, a subframe used to transmit the NPRS is set as an invalid subframe, and another downlink scheduling is not performed in the subframe. In a second mode, a subframe in which the NPRS is located is still used for downlink scheduling, and puncturing processing is performed on a resource element (resource element, RE) occupied by the NPRS in a scheduling process.

However, for the first mode, because the subframe in which the NPRS is located is no longer used for another downlink scheduling, a waste of downlink resources is caused. For the second mode, when demodulating a signal on a resource including the NPRS, the terminal cannot obtain a puncturing location of the NPRS on the downlink resource, and the NPRS causes interference to downlink data demodulation. Consequently, a downlink demodulation success rate of the terminal is reduced, and a downlink rate is reduced.

**SUMMARY**

This application discloses a data transmission method and an apparatus, so that interference caused by a PRS to downlink data demodulation can be reduced, and a downlink rate can be increased.

According to a first aspect, an embodiment of this application provides a data transmission method. The method includes: A terminal receives a first message sent by a network device. The first message carries first configuration information. The first configuration information indicates a resource location configured for a positioning reference signal PRS on a downlink resource. A resource on the downlink resource other than the resource occupied by the PRS is used to carry to-be-demodulated data. The terminal demodulates the to-be-demodulated data based on the first configuration information. When demodulating data carried on the downlink resource, the terminal skips the resource occupied by the PRS.

In the foregoing data transmission method, an NPRS can be removed when a terminal demodulates data, interference from the NPRS during data demodulation can be reduced, the data demodulation can be performed more accurately, and a downlink rate can be increased.

In specific implementation, the first configuration information may include configuration information of an NPRS_ID and a Part B. The NPRS_ID may represent a distribution location of the NPRS in frequency domain of the downlink resource. The configuration information of the part B may include information about a distribution period of the NPRS in the downlink resource, and the like, and may be used to represent a distribution location of the NPRS in time domain of the downlink resource. The terminal may learn, based on the first configuration information, an RE location configured for the NPRS on the downlink resource.

In a possible implementation, the first message includes one or more of the following: a system message SIB2 or a system message SIB22.

In specific implementation, the first configuration information may be added to a late non-critical extension (lateNonCriticalExtension) field of an extended field of an SIB2-NB. Because the lateNonCriticalExtension field may be used to carry common channel related information, that the first configuration information is carried in the field meets a configuration rule and facilitates downward compatibility.

In specific implementation, the first configuration information may also be added to a DL-CarrierConfigCommon-NB-r14 (DL-CarrierConfigCommon-NB-r14) field in an SIB22-NB.

Optionally, the network device may periodically send the first message.

In a possible implementation, if the downlink resource includes a physical resource block PRB of an anchor carrier in a plurality of carriers, the first message includes the system message SIB2; or if the downlink resource includes a PRB of a non-anchor carrier in a plurality of carriers, the first message includes the system message SIB22.

In a multi-carrier scenario, each of a plurality of carriers corresponds to a respective PRB. That is, there are a plurality of PRBs. The NPRS may be carried on any one or more of the plurality of PRBs.

In an NB-IoT scenario, the SIB2 may be the SIB2-NB, and the SIB22 may be the SIB22-NB.

In a possible implementation, the first message is sent to the terminal by the network device when the network device is configured to be in a second mode, and in the second mode, the resource on the downlink resource other than the resource occupied by the PRS is used to carry the to-be-demodulated data.

According to a second aspect, an embodiment of this application provides a data transmission method. The method includes: A network device sends a first message to a terminal. The first message carries first configuration information, the first configuration information indicates a resource location configured for a positioning reference signal PRS on a downlink resource. A resource on the downlink resource other than the resource occupied by the PRS is used to carry to-be-demodulated data. The first configuration information is used by the terminal to demodulate the to-be-demodulated data based on the first configuration information. When demodulating data carried on the downlink resource, the terminal skips the resource occupied by the PRS.

In the foregoing data transmission method, an NPRS can be removed when a terminal demodulates data, interference from the NPRS during data demodulation can be reduced, the data demodulation can be performed more accurately, and a downlink rate can be increased.

In specific implementation, the first configuration information may include configuration information of an NPRS_ID and a Part B. The NPRS_ID may represent a distribution location of the NPRS in frequency domain of the downlink resource. The configuration information of the part B may include information about a distribution period of the NPRS in the downlink resource, and the like, and may be used to represent a distribution location of the NPRS in time domain of the downlink resource. The terminal may learn, based on the first configuration information, an RE location configured for the NPRS on the downlink resource.

In a possible implementation, the first message is one or more of the following: a system message SIB2 or a system message SIB22.

In specific implementation, the first configuration information may be added to a late non-critical extension (lateNonCriticalExtension) field of an extended field of an SIB2-NB. Because the lateNonCriticalExtension field may be used to carry common channel related information, that the first configuration information is carried in the field meets a configuration rule and facilitates downward compatibility.

In specific implementation, the first configuration information may also be added to a DL-CarrierConfigCommon-NB-r14 (DL-CarrierConfigCommon-NB-r14) field in an SIB22-NB.

Optionally, the network device may periodically send the first message.

In a possible implementation, if the downlink resource includes a physical resource block PRB of an anchor carrier in a plurality of carriers, the first message includes the system message SIB2; or if the downlink resource includes a PRB of a non-anchor carrier in a plurality of carriers, the first message includes the system message SIB22.

In a multi-carrier scenario, each of a plurality of carriers corresponds to a respective PRB. That is, there are a plurality of PRBs. The NPRS may be carried on any one or more of the plurality of PRBs.

In a possible implementation, that the network device sends the first message to the terminal includes: In a second mode, the network device sends the first message to the terminal, and in the second mode, the resource on the downlink resource other than the resource occupied by the PRS is used to carry the to-be-demodulated data.

In an NB-IoT scenario, the SIB2 may be the SIB2-NB, and the SIB22 may be the SIB22-NB.

According to a third aspect, an embodiment of this application provides a terminal, including a processor and a memory. The memory is configured to store a program instruction, and the processor is configured to invoke the program instruction to perform the method provided in any one of the first aspect or the possible implementations of the first aspect.

According to a fourth aspect, an embodiment of this application provides a network device, including a processor and a memory. The memory is configured to store a program instruction, and the processor is configured to invoke the program instruction to perform the method provided in any one of the second aspect or the possible implementations of the second aspect.

According to a fifth aspect, an embodiment of this application provides a terminal. The terminal includes modules or units configured to perform the data transmission method provided in any one of the first aspect or the possible implementations of the first aspect.

According to a sixth aspect, an embodiment of this application provides a network device. The network device includes modules or units configured to perform the data transmission method provided in any one of the second aspect or the possible implementations of the second aspect.

According to a seventh aspect, an embodiment of the present invention provides a chip system. The chip system includes at least one processor, a memory, and an interface circuit. The memory, the interface circuit, and the at least one processor are interconnected by using a line, and the at least one memory stores a program instruction. When the program instruction is executed by the processor, the method described in any one of the first aspect or the possible implementations of the first aspect is implemented.

According to an eighth aspect, an embodiment of the present invention provides a chip system. The chip system includes at least one processor, a memory, and an interface circuit. The memory, the interface circuit, and the at least one processor are interconnected by using a line, and the at least one memory stores a program instruction. When the program instruction is executed by the processor, the method described in any one of the second aspect or the possible implementations of the second aspect is implemented.

According to a ninth aspect, an embodiment of the present invention provides a computer-readable storage medium. The computer-readable storage medium stores a program instruction. When the program instruction is run by a processor, the method described in any one of the first aspect or the possible implementations of the first aspect is implemented.

According to a tenth aspect, an embodiment of the present invention provides a computer-readable storage medium. The computer-readable storage medium stores a program instruction. When the program instruction is run by a processor, the method described in any one of the second aspect or the possible implementations of the second aspect is implemented.

According to an eleventh aspect, an embodiment of the present invention provides a computer program product. When the computer program product is run by a processor, the method described in any one of the first aspect and the possible implementations of the first aspect is implemented.

According to a twelfth aspect, an embodiment of the present invention provides a computer program product. When the computer program product is run by a processor, the method described in any one of the second aspect and the possible implementations of the second aspect is implemented.

In the embodiments of this application, when demodulating data on the downlink resource, the terminal may remove the NPRS based on the learned location of the RE distributed on the downlink resource by the NPRS. To be specific, the terminal punctures the NPRS during downlink decoding, to remove the NPRS carried on the downlink resource. In this way, the interference from the NPRS during the data demodulation can be reduced, the data demodulation can be performed more accurately, and the downlink rate can be increased.

**BRIEF DESCRIPTION OF DRAWINGS**

The following describes accompanying drawings used in embodiments of this application.

FIG. 1 is a schematic diagram of an application scenario of terminal positioning according to an embodiment of this application;
FIG. 2 is a schematic architectural diagram of a network system according to an embodiment of this application;
FIG. 3 is a schematic flowchart of a terminal positioning method according to an embodiment of this application;
FIG. 4 is a schematic diagram of distribution of an NPRS in an NB-IoT downlink resource according to an embodiment of this application;
FIG. 5 is a schematic flowchart of a data transmission method according to an embodiment of this application;
FIG. 6 is a schematic structural diagram of a terminal and a network device according to an embodiment of this application;
FIG. 7 is a schematic structural diagram of another terminal according to an embodiment of this application; and
FIG. 8 is a schematic structural diagram of a network device according to an embodiment of this application.

**DESCRIPTION OF EMBODIMENTS**

The following describes the embodiments of this application with reference to the accompanying drawings in the embodiments of this application. Terms used in implementations of the embodiments this application are merely intended to explain specific embodiments of this application, and are not intended to limit this application.

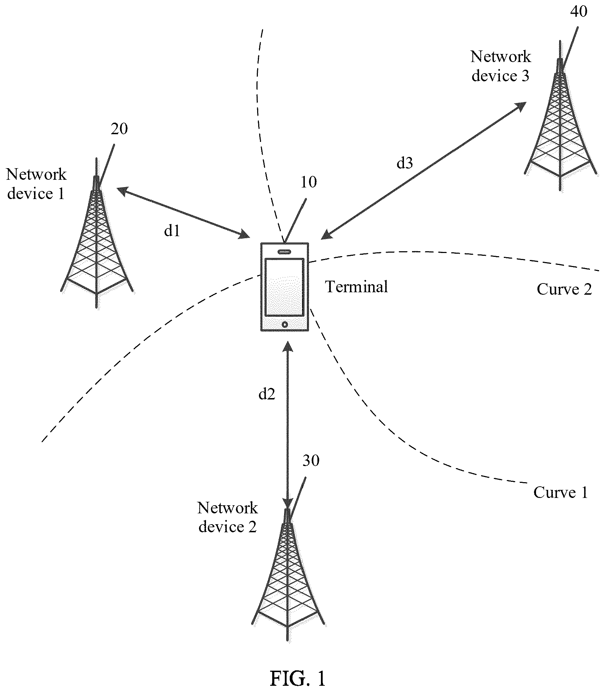

First, application scenarios related to the embodiments of this application are described. FIG. 1 is a schematic diagram of an application scenario of terminal positioning according to an embodiment of this application. A device related to the application scenario of the terminal positioning may include a terminal 10 and at least three network devices. In this embodiment of this application, three network devices are used as an example for description. It may be understood that, to improve positioning accuracy of the terminal 10, four or more network devices may be further used to implement positioning of the terminal 10. A specific positioning process may be similar to a case in which three network devices are used. Details are not described herein again. The terminal positioning may include the following steps.

Step 1: The terminal 10 listens on the network device, and measures a time at which a PRS from the network device arrives at the terminal 10, that is, a downlink arrival time. The downlink arrival time is a moment at which the PRS from the network device arrives at the terminal 10.

Specifically, the terminal 10 may measure a time at which the PRS from a network device 20 arrives at the terminal 10, that is, a downlink arrival time t1. Similarly, the terminal 10 may measure a time t2 (a downlink arrival time t2) at which the PRS from a network device 30 arrives at the terminal 10 and a time t3 (a downlink arrival time t3) at which the PRS from a network device 40 arrives at the terminal 10.

Step 2: The terminal 10 calculates a value of an observed difference t2-t1 between the downlink arrival time t1 and the downlink arrival time t2, and calculates a value of an observed difference t3-t1 between the downlink arrival time t1 and the downlink arrival time t3.

In this embodiment of this application, a cell covered by the network device 20 may be a reference cell of the terminal 10. The terminal 10 may calculate values of observed differences between downlink arrival times of the other two network devices and the downlink arrival time of the network device 20. In this embodiment of this application, the reference cell may be a serving cell of the terminal 10. Cells covered by the network device 30 and the network device 40 may be neighboring cells of the terminal 10.

Step 3: An evolved serving mobile location center (evolved serving mobile location centre, E-SMLC) determines a location of the terminal 10 based on the values of the observed differences t2-t1 and t3-t1 between the downlink arrival times sent by the terminal 10. For details about the connection relationship and functions of the E-SMLC, refer to the following description.

Specifically, a coordinate of the terminal 10 is set to (x, y), and the coordinate may represent geographical location information of the terminal 10. Coordinates of the network device 20, the network device 30, and the network device 40 are known, and are sequentially (x1, y1), (x2, y2), and (x3, y3). A transmission speed of the PRS between the terminal 10 and the network device is a transmission speed of an electromagnetic wave in air, which is approximately a speed of light c. A moment at which the network device 20 sends the PRS is T1, a moment at which the network device 30 sends the PRS is T2, and a moment at which the network device 40 sends the PRS is T3. Then:

$$\text{ti} - \text{Ti} = \frac{di}{c} = \frac{\sqrt{(x-xi)^2+(y-yi)^2}}{c} \quad (1)$$

The values of i are 1, 2, and 3 in sequence, and d1, d2, and d3 are distances from the terminal 10 to the network device 20, the network device 30, and the network device 40 respectively.

The value of the observed difference between the downlink arrival times is calculated as follows:

$$\begin{cases} \text{t2} - \text{t1} = (T2 - T1) + \frac{\sqrt{(x-x2)^2+(y-y2)^2}-\sqrt{(x-x1)^2+(y-y1)^2}}{c} \\ \text{t3} - \text{t1} = (T3 - T1) + \frac{\sqrt{(x-x3)^2+(y-y3)^2}-\sqrt{(x-x1)^2+(y-y1)^2}}{c} \end{cases} \quad (2)$$

In the formula (2), the foregoing two hyperbolic equations are required when determining the location (x, y) of the terminal 10, and the geographical location information of the terminal 10 is determined by an intersection point of the two curves.

It may be understood that, it is not limited to a quantity of candidate cells. To improve positioning accuracy of the terminal 10, the terminal 10 may also measure values of the observed differences between the downlink arrival times of three or more network devices and the network device 20. To be specific. the location of the terminal 10 is determined based on three or more curves.

The value of the observed differences t2-t1 and t3-t1 between the arrival downlink times may be referred to as OTDOA. A moment at which the network device 20 sends the PRS is T1, a moment at which the network device 30 sends the PRS is T2, and a moment at which the network device 40 sends the PRS is T3. Due to time asynchronization, an error may exist, and the error is a relative time difference (relative time difference, RTD) of frame timing. Therefore, the actual time difference of arrival (time difference of arrival, TDOA) of the NPRS transmitted between the reference cell and the plurality of candidate cells may be calculated based on the OTDOA and the RTD. That is, TDOA=OTDOA-RTD. If the RTDs corresponding to the network device 30 and the network device 40 are respectively t2' and t3', the formula (2) may be further precise as follows:

$$\begin{cases} \text{t2} - \text{t1} = (T2 - T1) + \text{t2}' + \frac{\sqrt{(x-x2)^2+(y-y2)^2}-\sqrt{(x-x1)^2+(y-y1)^2}}{c} \\ \text{t3} - \text{t1} = (T3 - T1) + \text{t3}' + \frac{\sqrt{(x-x3)^2+(y-y3)^2}-\sqrt{(x-x1)^2+(y-y1)^2}}{c} \end{cases} \quad (3)$$

After determining coordinates (x, y) of the terminal, the E-SMLC may determine the geographic location information of the terminal. The geographic location information may include location information and geographic coordinates of the latitude and longitude at which the terminal 10 is located, or may include assistance data for positioning of the terminal 10, for example, accuracy estimation.

Second, a network architecture and a procedure related to the positioning of the terminal 10 in the embodiments of this application are described.

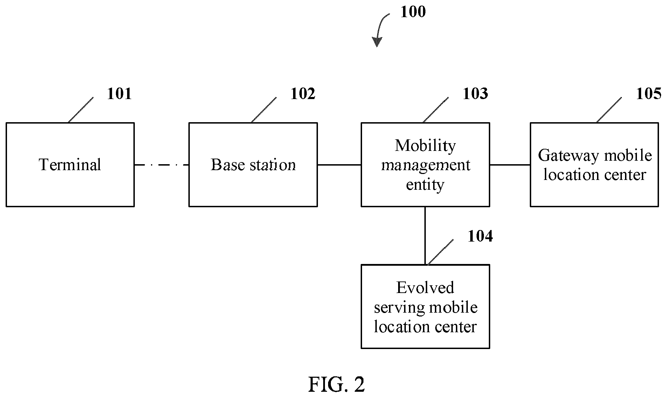

FIG. 2 is a schematic architectural diagram of a network system according to an embodiment of this application. The network system 100 may be an LTE communications system, or may be an NB-IoT system. The network system also supports a radio access technology defined by another 3GPP standard group. Specifically, for example, an access core network (core network, CN) such as a $5^{th}$ generation mobile communications system radio access network (5-generation radio access network, 5GRAN) or a next-generation RAN (next generation RAN, NG RAN). Alternatively, the radio access technology may be another newly emerging radio access technology in the future. This is not limited in this embodiment of this application. The system architecture shown in FIG. 2 may alternatively be a future evolved new radio (new radio, NR) system, a machine to machine (machine to machine, M2M) communication system, or the like.

As shown in FIG. 2, the network system 100 includes a terminal 101, a base station (Evolved Node B, eNB) 102, a mobility management entity (Mobility Management Entity, MME) 103, an E-SMLC 104, and a gateway mobile location center (Gateway Mobile Location Center, GMLC) 105. A communication connection may be established between a terminal 101 and the base station 102. The terminal 101 may communicate with the MME 103 by using the base station 102, or may communicate with the E-SMLC 104 by using the base station 102 and the MME 103.

The terminal 101 is mainly configured to:

1. Receive NPRSs sent by a plurality of base stations in a location service (location service, LCS), obtain OTDOA or TDOA through calculation, and send a message carrying the OTDOA or TDOA to the E-SMLC 104. The message carrying the OTDOA or TDOA may be used by the E-SMLC 104 to determine location information of the terminal 101.

2. Report positioning capability information to the E-SMLC 104. The positioning capability information is used by the E-SMLC 104 to select a positioning method based on the positioning capability information and other information. The other information may include a quality of service (quality of service, QoS) requirement of a location-related application, a positioning method configured in the E-SMLC 104, and the like.

3. Initiate a location service, and send a message to the MME 103. The message includes assistance data for requesting self-positioning information or requesting a positioning method. The terminal 101 may be the terminal 10 described in FIG. 1.

4. Receive and demodulate downlink data carried on a downlink resource by the base station 102. The downlink data may include control data, user data, and the like.

The terminal 101 may be mobile user equipment (user equipment, UE), an access terminal, a subscriber unit, a subscriber station, a mobile station, a mobile console, a remote station, a remote terminal, a user terminal, or a user agent. The access terminal may be a cellular phone, a handheld device having a positioning function, a computing device or a vehicle-mounted device, a wearable device, a terminal in a 5G system, a terminal in a future evolved public land mobile network (public land mobile network, PLMN), or the like. Specifically, the terminal 101 may be a mobile phone (mobile phone), a tablet (Pad), a computer having a wireless transceiver function, a virtual reality (virtual reality, VR) terminal equipment, an augmented reality (augmented reality, AR) terminal equipment, a wireless terminal in industrial control (industrial control), a wireless terminal in self-driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The eNB 102 is mainly configured to:

1. Receive an OTDOA assistance data request initiated by the E-SMLC 104. The request requests to report an OTDOA assistance data to the eNB 102.

2. Send PRS configuration information and measurement information to the E-SMLC 104.

3. Send a PRS to the terminal 101. The eNB 102 may be further configured to complete positioning-related measurement, and report a measurement result to the E-SMLC 104.

4. Communicate with one or more terminals 101, or may be configured to communicate with one or more base stations having some terminal functions (for example, communication between a macro base station and a micro base station, such as an access point).

The eNB 102 may be a base transceiver station (base transceiver station, BTS) in a time division synchronous code division multiple access (time division synchronous code division multiple access, TD-SCDMA) system, or may be an evolved NodeB (evolutional node B, eNB) in an LTE system, or a base station in a 5th generation (5th-generation, 5G) mobile communications system and a new radio (new radio, NR) system. In addition, the eNB 102 may alternatively be an access point (access point, AP), a transmission node (transmission and receiving point, TRP), a central unit (central unit, CU), or another network entity, and may include some or all of functions of the foregoing network entities. In a future communications system, the eNB 102 may have another name. This is not specifically limited in this embodiment of this application.

The MME 103 is mainly configured to:

1. Forward an LCS service request to the E-SMLC 104. The LCS service request may be initiated by the terminal 101, or may be initiated by a location-related application to the MME 103 through the GMLC 105, or may be initiated by a network element in the PLMN that is providing a service for the terminal 101. For example, the MME 103 needs to initiate the LCS service request to the terminal 101.

2. Support an LTE positioning protocol annex (LTE positioning protocol annex, LPPa) and implement positioning-related interaction with the eNB 102.

3. Transparently transmit a positioning-related message between the E-SMLC 104 and another entity, for example, a positioning-related message between the E-SMLC 104 and the eNB 102, or a positioning-related message between the E-SMLC 104 and the terminal 101.

4. Be responsible for positioning, paging, and relay processes of the terminal 101 in an idle mode. Specifically, the MME 103 is configured to support non-access stratum (non-access stratum, NAS) signaling and its security, management of a tracking area (tracking area, TA) list, a public data network gateway (public data network gateway, P-GW), and selection of serving gateway (serving gateway, S-GW), selection of an MME during inter-MME handover, selection of a serving GPRS support node (serving GPRS support node, SGSN) during handover to a 2G/3G access system, user authentication, roaming control and bearer management, mobility management between core network nodes of different 3GPP access networks, and reachability management (including control and execution of paging retransmission) of the terminal 101 in the idle state.

The E-SMLC 104 is mainly configured to:

1. Support high-precision positioning services, including positioning procedure control, positioning calculation, and network measurement management on an access network side. The 3GPP protocol specifies that the E-SMLC 104 may be integrated in a radio network controller (radio network controller, RNC), or may be physically implemented as an independent functional module. When the E-SMLC 104 is independently disposed, the E-SMLC 104 may be referred to as a stand alone SMLC (stand alone SMLC, SAS).

2. Schedule and manage positioning resources. The E-SMLC 104 is a main functional unit for positioning measurement and positioning calculation. After receiving a location request, the E-SMLC 104 may select a proper positioning method based on a plurality of factors, control the terminal 101 and the eNB 102 to measure the location information, and calculate longitude and latitude based on the selected positioning method and the obtained positioning information. The plurality of factors may include one or more of the following: the quality of service (quality of service, QoS) requirement of the location-related application, a positioning capability of the terminal 101, a positioning function activation identifier of a cell in which the terminal 101 is located, an LCS license purchased by a network operator, and the like.

3. Calculate the location information, estimate positioning accuracy, and send a positioning result that includes the location information or related positioning data to the MME 103.

4. To ensure that the terminal 101 can find a signal of a neighboring cell more easily, the E-SMLC 104 is further configured to calculate positioning assistance data, and deliver the positioning assistance data to the terminal 101.

The GMLC 105 is mainly configured to:

1. Receive an LCS request from the location-related application, send routing information for positioning the terminal 101 to the E-SMLC 104, and return an acquired positioning result to the location-related application. The GMLC 105 is a gateway for the location-related application to obtain the location information of the terminal 101, and is connected to an external LCS client. The GMLC 105 may be included in a core network (core network, CN), and may serve as a server of the LCS.

2. Authenticate and authorize users and external LCS clients, convert longitude and latitude information from the E-SMLC 104 to geographical coordinates, charge users and external LCS clients, receive requests from external LCS clients and correspondingly respond to the requests, and manage user data, service data, service subscription information, service provider (service provider, SP) data, and the like. The external LCS client (not shown in the figure) is the location-related application provided by a network operator or another third party, and is also referred to as the location-related application. The external LCS client establishes a communication connection to the GMLC 105.

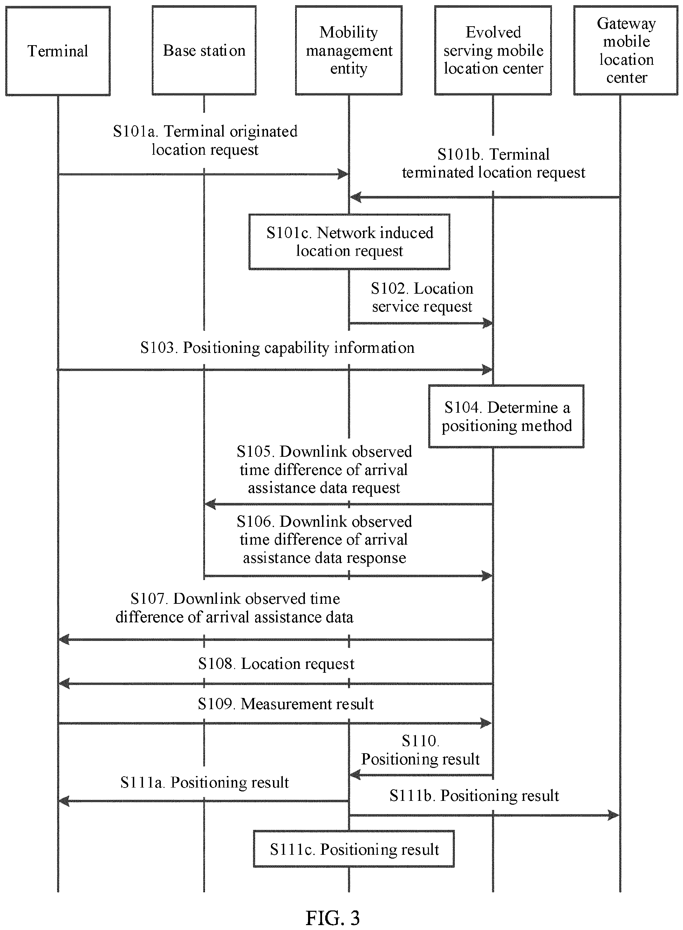

Based on the network system described in FIG. 2, the following describes a specific procedure of positioning the terminal 101. FIG. 3 is a schematic flowchart of a terminal positioning method according to an embodiment of this application. As shown in FIG. 3, the terminal positioning method includes steps S101 to S111.

S101. Initiate an LCS request to the MME 103.

In specific implementation, step S101 may be initiated by the terminal 101, or may be also initiated by the GMLC 105, or may be further initiated by a network element in a PLMN that is providing a service for the terminal 101, for example, initiated by the MME 103. Therefore, step S101 may be specifically implemented as step S101a, S101b, or S101c, which is separately described as follows.

S101a. The terminal 101 sends a terminal originated location request (mobile originated location request, MO-LR) to the MME 103. The request may be sent in a form of a NAS message, and the NAS message is used to request a positioning service. The NAS message may include information used to request a location of the terminal 101 or assistance data used to request a positioning method. The assistance data is used to request the location of the terminal 101.

S101b. The GMLC 105 sends a terminal terminated location request (mobile terminated location request, MO-LR) to the MME 103. The request is used by a location-related application to request to locate the terminal 101. The location-related application may be an external LCS client.

S101c. The MME 103 generates a network induced location request (network induced location request, NI-LR). The location request may be further generated by the network element in the PLMN that is providing a service for the terminal 101.

S102. The MME 103 sends the LCS request to the E-SMLC 104.

S103. The terminal 101 reports positioning capability information to the E-SMLC 104.

The positioning capability information of the terminal 101 may include indication information indicating whether the terminal 101 supports an OTDOA positioning mode.

S104. The E-SMLC 104 determines the positioning method.

The E-SMLC 104 may select an appropriate positioning method based on a plurality of factors. The plurality of factors may include one or more of the following: a QoS requirement of the location-related application, the positioning capability of the terminal 101, a positioning function activation identifier of a cell in which the terminal 101 is located, an LCS license purchased by a network operator, and the like.

S105. The E-SMLC 104 initiates an OTDOA assistance data request to the eNB 102.

The request is used to request to report OTDOA assistance data to the eNB 102. The OTDOA assistance data is used to assist in OTDOA measurement. Specifically, when carrier frequencies of a reference cell and a candidate cell are different frequencies, the OTDOA assistance data may include information about an inter-frequency neighboring cell, which is used by the terminal 101 to perform a measurement of receiving time of an inter-frequency PRS. The OTDOA assistance data may further include PRS configuration information of the reference cell and the candidate cell, frame timing information of the eNB 102 and the base station of the candidate cell, physical cell identifiers (physical cell identifier, PCI) of the eNB 102 and each candidate cell, and a general communication interface (general communication interface, GCI). The PRS configuration information may include information indicating a resource location occupied by a PRS on a downlink resource, for example, pointer information used to indicate a time domain location, and a PRS identifier used to indicate frequency domain information.

S106. The eNB 102 sends an OTDOA assistance data response to the E-SMLC 104.

The OTDOA assistance data response may include the OTDOA assistance data.

S107. The E-SMLC 104 sends the OTDOA assistance data to the terminal 101.

S108. The E-SMLC 104 initiates a location request to the terminal 101.

The location request may be initiated by the E-SMLC 104 to the terminal 101 by using a lightweight presentation protocol (lightweight presentation protocol, LPP) message Request Location Information. The location request may be used to request the terminal 101 to perform a measurement of a time difference of arrival of the PRS.

S109. When receiving the location request, the terminal 101 starts to perform the measurement of the time difference of arrival of the PRS, and sends a measurement result to the E-SMLC 104.

Specifically, the terminal 101 may perform the measurement based on the OTDOA assistance data. For example, the OTDOA assistance data includes the information about the inter-frequency neighboring cell, so that the terminal 101 may perform the measurement of the receiving time of the inter-frequency PRS. The OTDOA assistance data further includes the PRS configuration information. The terminal 101 measures an observed time difference of the PRS signal on a downlink resource unit indicated by the PRS configuration information. For a specific measurement step, refer to specific descriptions of step 1 and step 2 in the scenario described in FIG. 1. Details are not described herein again. The measurement result may include the foregoing OTDOA or TDOA, and the measurement result may be reported to the E-SMLC 104 by using an LPP message Provide Location Information.

S110. The E-SMLC 104 locates the terminal 101 based on the measurement result, and sends a positioning result to the MME 103.

For a specific location process of the terminal 101, refer to specific descriptions of step 3 in the scenario described in FIG. 1. Details are not described herein again. The positioning result may include geographical location information of the terminal 10, identification information indicating whether positioning succeeds or fails, error information, and the like.

S111. The MME 103 sends the positioning result.

The LCS request may be initiated by the terminal 101, the GMLC 105, or the MME 103, and the positioning result is sent by the MME 103 to a specific initiator of the LCS request. When step S101 is specifically implemented as S101a, the MME 103 transparently transmits the positioning result to the terminal 101. When step S101 is specifically implemented as S101b, the MME 103 may transparently transmit the positioning result to the network entity on which the location-related application is run. When step S101 is specifically performed as S101c, the MME 103 transparently transmits the positioning result to the network element that initiates the location request.

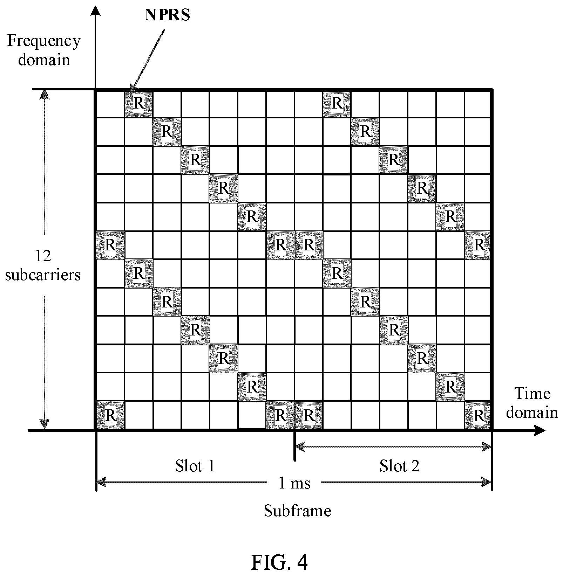

In an NB-IoT scenario, an NB-IoT positioning reference signal that is sent to a terminal by a cell is an NPRS. The following describes distribution of an NPRS in an NB-IoT downlink resource. FIG. 4 is a schematic diagram of distribution of an NPRS in an NB-IoT downlink resource according to an embodiment of this application. As shown in FIG. 4, an RE occupied by the NPRS occupies 1/6 of a subframe in frequency domain. In addition, a frequency domain offset of the RE occupied by the NPRS is equal to NPRS-ID modulo 6. That is, the NPRS-ID is used to perform a modulo operation on 6. The NPRS-ID may be a physical cell ID (physical cell identity, PCID). That is, an ID of a physical cell is from the NPRS, and the NPRS-ID may also be configured. A location of the RE occupied by the NPRS is determined by the frequency domain offset.

The NPRS may be deployed on a time-frequency resource in two manners. Descriptions are separately provided below.

A first manner (Part A): A subframe used to transmit an NPRS no longer transmits another downlink data. That is, the subframe used to transmit the NPRS is set as an invalid subframe for other downlink data. This deployment manner wastes downlink resources and increases a downlink capacity loss.

A second manner (Part B): In addition to the RE occupied by the NPRS, a subframe used to transmit the NPRS is still used for downlink data transmission. This deployment manner saves the downlink resources and reduces the downlink capacity loss. From a perspective of a network device side, when downlink data is deployed, the RE occupied by the NPRS needs to be avoided. To be specific, puncturing processing needs to be performed on the RE occupied by the NPRS. For the terminal, when performing OTDOA measurement, the terminal may determine, based on OTDOA assistance data, the location of the RE occupied by the NPRS, and then receive the NPRS to perform the OTDOA measurement. For a specific description of performing the OTDOA measurement, refer to the specific description of S109 in FIG. 3.

In this embodiment of this application, that the NPRS is punctured and occupied on the downlink resource means that several REs on the downlink resource are used to carry the NPRS, and the downlink resource is still used for the downlink data transmission after the RE occupied by the NPRS is excluded. In this embodiment of this application, a part of the downlink resource other than the RE occupied by the NPRS may be occupied by a physical downlink control channel (physical downlink control channel, PDCCH) or a physical downlink shared channel (physical downlink shared channel, PDSCH). The downlink resource may be one or more subframes. In this embodiment of this application, the RE is used to carry the NPRS. In other words, the NPRS is configured on the RE and transmitted to the terminal.

However, in the second manner, when demodulating the downlink data, the terminal uses all subframes carrying the NPRS as the downlink data for demodulation. Because the subframe carries the NPRS, and the NPRS causes interference to downlink data demodulation, downlink demodulation fails during downlink demodulation, and a downlink rate is decreased.

Based on the schematic architectural diagram of the network system in FIG. 2, the embodiments of this application provide a data transmission method and an apparatus, so that the interference caused by the NPRS to the downlink data demodulation can be reduced, and the downlink rate can be increased.

A main inventive principle in the embodiments of this application is as follows: In the second manner, to be specific, when the NPRS is punctured and occupied on the downlink resource, the network device may notify, by using a first message carrying a first configuration information, the terminal of a resource location configured for the NPRS on the downlink resource. When performing data demodulation on the downlink resource, the terminal removes the NPRS based on the first configuration information. To be specific, when demodulating data carried on the downlink resource, the terminal skips the resource occupied by the NPRS. The terminal removes the NPRS during the data demodulation, so that interference from the NPRS during the data demodulation can be reduced, the data demodulation can be performed more accurately, and the downlink rate can be increased.

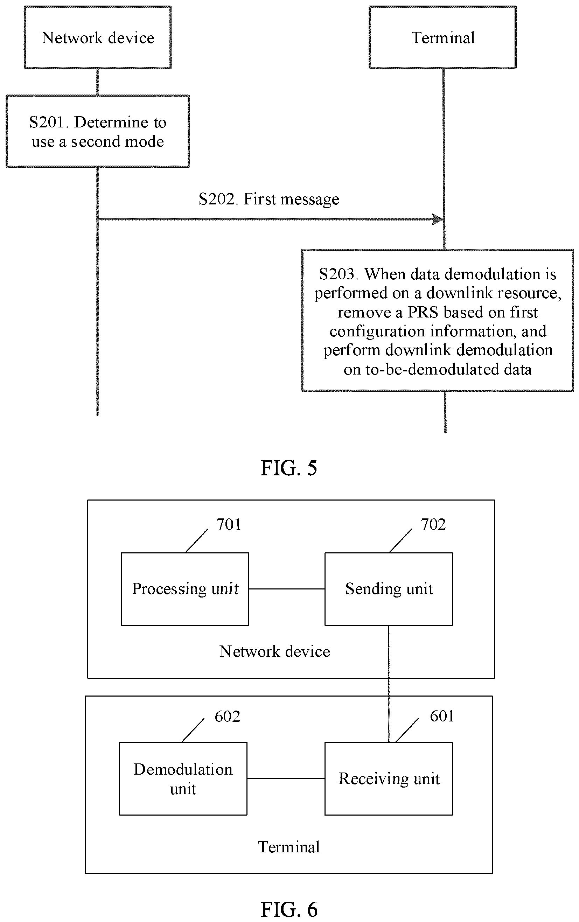

Based on the foregoing main invention principle, an embodiment of this application provides a data transmission method, so that the downlink rate can be increased. FIG. 5 is a schematic flowchart of a data transmission method according to an embodiment of this application. In the data transmission method, a network device may be a base station covering a serving cell of a terminal. The data transmission method includes but is not limited to steps S201 to S203.

S201. The network device determines to use a second mode.

S202. The network device sends a first message.

S203. When data demodulation is performed on a downlink resource, the terminal removes a PRS based on first configuration information, and performs downlink demodulation on to-be-demodulated data.

In this embodiment of this application, the PRS in an NB-IoT system is an NPRS. The network device may be configured to use the second mode when configuring a deployment manner of the NPRS. In the embodiments of this application, an example in which a network system is an NB-IoT system and a PRS is an NPRS is used for description. It may be understood that the example is merely used to explain the embodiments of this application, and is not limited to the NB-IoT system. This application is also applicable to a similar application scenario.

The following separately describes the first configuration information and the first message.

(1) First configuration information

The first configuration information indicates a resource location configured for the NPRS on the downlink resource. The first configuration information may include configuration information of an NPRS_ID and a Part B. The NPRS_ID may represent a distribution location of the NPRS in frequency domain of the downlink resource. The configuration information of the part B may include information about a distribution period of the NPRS in the downlink resource, and the like, and may be used to represent a distribution location of the NPRS in time domain of the downlink resource. The terminal may learn, based on the first configuration information, an RE location configured for the NPRS on the downlink resource.

(2) First message

The first message carries the first configuration information. In an NB-IoT system scenario, the first message may be a system message of an NB-IoT. To be specific, the first configuration information is carried in the system message of the NB-IoT.

In a possible implementation, the first message may be a system message: a system information block category 2 (NB-IoT system information block type 2, SIB2-NB) message. The network device may broadcast the system message, and the terminal may receive the system message. Specifically, the first configuration information may be added to a late non-critical extension (lateNonCriticalExtension) field of an extended field of an SIB2-NB. Because the lateNonCriticalExtension field may be used to carry common channel related information, that the first configuration information is carried in the field meets a configuration rule and facilitates downward compatibility.

In a multi-carrier scenario, the first message may include one or more of the SIB2-NB and a system information block category 22 (NB-IoT system information block type 22, SIB22-NB). The first configuration information may be further carried in a system message SIB22-NB message and sent to the terminal. The following specifically describes the multi-carrier scenario. In the multi-carrier scenario, the plurality of carriers of the network device may include one anchor carrier (anchor carrier) and several non-anchor carriers (non-anchor carrier). Spectrum bandwidth of each carrier is 180 kHz, and only the anchor carrier can carry messages such as a synchronization message and a broadcast message. The terminal can transmit data only on one carrier at a time, and is not allowed to transmit the data on both the anchor carrier and the non-anchor carrier. Each of the plurality of carriers corresponds to one physical resource block (physical resource block, PRB), and the network device may transmit the data to the terminal on the PRB of one carrier.

In this embodiment of this application, RE location information of the NPRS carried on the PRB of the anchor carrier in the plurality of carriers may be carried in the SIB2-NB message to notify the terminal. The RE location information of the NPRS carried on the PRB of the non-anchor carrier may be carried in the SIB22-NB message to notify the terminal. The first configuration information is added to a DL-CarrierConfigCommon-NB-r14 (DL-CarrierConfigCommon-NB-r14) field in the SIB22-NB. To be specific, in a multi-carrier scenario, when a downlink resource used to carry the NPRS includes a PRB of an anchor carrier in the plurality of carriers, the first message includes the SIB2-NB; or when a downlink resource used to carry the NPRS includes a PRB of a non-anchor carrier in the plurality of carriers, the first message includes the SIB22-NB.

In this embodiment of this application, in a multi-carrier scenario, each of a plurality of carriers corresponds to a respective PRB. That is, there are a plurality of PRBs. The NPRS may be carried on any one or more of the plurality of PRBs. The following separately describes the first message in the two cases.

a. The NPRS is carried on one of the plurality of PRBs.

When the NPRS is carried on one of the plurality of PRBs, the PRB may be the PRB of the anchor carrier, or may be the PRB of the non-anchor carrier. When the PRB is the PRB of the anchor carrier, the system message (the first message) carrying the first configuration information may be the SIB2-NB. To be specific, the network device carries the first configuration information in the SIB2-NB, and sends the SIB2-NB to the terminal. When the PRB is the PRB of the non-anchor carrier, the system message (the first message) carrying the first configuration information may be the SIB22-NB. To be specific, the network device carries the first configuration information in the SIB22-NB, and sends the SIB22-NB to the terminal.

b. The NPRS is carried on the plurality of PRBs.

When the NPRS is carried on the plurality of PRBs, there may be a plurality of pieces of first configuration information, and the pieces of first configuration information is independent of each other. The plurality of pieces of first configuration information indicates the resource location configured for the NPRS on the PRB carrying the NPRS. Each PRB carrying the NPRS corresponds to one piece of first configuration information, and the first configuration information corresponding to the PRB carrying the NPRS indicates the resource location configured for the NPRS on the PRB. When the PRB carrying the NPRS includes the PRB of the anchor carrier, the first message includes the SIB2-NB. To be specific, the system message that carries the first configuration information and that is sent by the network device may include the SIB2-NB. The first configuration information corresponding to the NPRS on the PRB of the anchor carrier is carried in the SIB2-NB. When the PRB carrying the NPRS includes the PRB of the non-anchor carrier, the system message that carries the first configuration information and that is sent by the network device may include the SIB22-NB. The first configuration information corresponding to the NPRS on the PRB of the non-anchor carrier is carried in the SIB22-NB.

For example, when the PRB of the anchor carrier in the plurality of PRBs carries the NPRS, and the PRB of one of the non-anchor carriers carries the NPRS, the network device includes the first configuration information corresponding to the PRB of the anchor carrier in the SIB2-NB, and broadcasts the SIB2-NB to the terminal. In addition, the network device carries the first configuration information corresponding to the PRB of the non-anchor carrier in the SIB22-NB, and broadcasts the SIB22-NB to the terminal. The first configuration information corresponding to the PRB of the anchor carrier indicates the resource location configured for the NPRS on the PRB of the anchor carrier. The first configuration information corresponding to the PRB of the non-anchor carrier indicates the resource location configured for the NPRS on the PRB of the non-anchor carrier. In this case, the quantity of first messages may include two: the foregoing SIB2-NB and SIB22-NB. It may be understood that the foregoing example of the first message is merely used to explain this embodiment of this application, and should not be construed as a limitation. The first message may alternatively be another system message. This is not limited in this embodiment of this application.

When the first message (for example, the SIB2-NB or the SIB22-NB) is the system message, the network device may periodically send the system message. The terminal may receive the system message in an idle (idle) state, to obtain the location of the RE carried by the NPRS on the downlink resource.

It may be understood that, when OTDOA measurement is performed, PRSs from plurality of network devices need to be measured. There may be a plurality of network devices. The terminal may receive first messages from the plurality of network devices, obtain configuration information of the NPRS of each of the plurality of network devices, and then obtain the location of the RE that is of the NPRS of each network device and that is carried on the downlink resource. Therefore, REs occupied by these NPRSs are punctured during data demodulation.

When demodulating data on the downlink resource, the terminal may remove the NPRS based on the learned location of the RE that is of the NPRS and that is distributed on the downlink resource. To be specific, the terminal punctures the NPRS during downlink decoding, to remove the NPRS carried in downlink data, so that interference from the NPRS during the data demodulation can be reduced. A part that is in the downlink resource and from which the RE occupied by the NPRS is removed may be occupied by a PDCCH or a PDSCH.

The following describes an example of a program procedure of the data transmission method provided in this embodiment of this application.

An example of the first configuration information is as follows:

```
nprsID-r14              INTEGER (0..4095) OPTIONAL,   -- Cond NPRS-ID
```

```
partB-r14              SEQUENCE {

    nprs-Period-r14         ENUMERATED { ms160, ms320, ms640, ms1280, ... },

    nprs-startSF-r14        ENUMERATED { zero, one-eighth, two-eighths, three-eighths,

                            four-eighths, five-eighths, six-eighths,

                            seven-eighths, ...},

    nprs-NumSF-r14          ENUMERATED { sf10, sf20, sf40, sf80, sf160, sf320,

                            sf640, sf1280, ...},

    nprs-MutingInfoB-r14        CHOICE {

        po2-r14         BIT STRING (SIZE(2)),

        po4-r14         BIT STRING (SIZE(4)),

        po8-r14         BIT STRING (SIZE(8)),

        po16-r14        BIT STRING (SIZE(16)),

        ...

    }           OPTIONAL,       -- Cond MutingB

    ...

}
```

The first configuration information may include the configuration information of the NPRS_ID and the Part B. As described in the foregoing program procedure, the NPRS_ID is configured by using an information element nprs_ID-r14, and configuration information of the Part B is configured by using an information element partB-r14. Information elements nprs ID-r14 and partB-r14 are sent by the network device to the terminal, and are used by the terminal to determine the resource location configured for the NPRS on the downlink resource. The first configuration information may be further carried in the first message and sent to the terminal. The first message may include one or more of the following: the SIB2-NB and the SIB22-NB. The following separately provides examples.

When the first message includes the SIB2-NB, an example in which first deployment information is carried in the SIB2-NB is as follows:

```
SystemInformationBlockType2-NB-r13 ::=    SEQUENCE {

    radioResourceConfigCommon-r13   RadioResourceConfigCommonSIB-NB-r13,

    ue-TimersAndConstants-r13       UE-TimersAndConstants-NB-r13,

    freqInfo-r13            SEQUENCE {

        ul-CarrierFreq-r13      CarrierFreq-NB-r13      OPTIONAL,    -- Need OP

        additionalSpectrumEmission-r13     AdditionalSpectrumEmission
```

```
},

    timeAlignmentTimerCommon-r13          TimeAlignmentTimer,

    multiBandInfoList-r13     SEQUENCE (SIZE (1..maxMultiBands))OF AdditionalSpectrumEmission

OPTIONAL,    -- Need OR

    lateNonCriticalExtension          OCTET STRING                          OPTIONAL,

    ...,

    [[    cp-Reestablishment-r14   ENUMERATED {true}            OPTIONAL        -- Need OP

    ]]

    [[    nprsID-r14                INTEGER (0..4095)       OPTIONAL,    -- Cond NPRS-ID

    ]]

    [[    OTDOA-partB      partB-r14                    OPTIONAL,

    ]]

}
```

As described in the foregoing program procedure, that is, the first deployment information is carried in the lateNonCriticalExtension field, and the information elements nprs_ID-r14 and partB-r14 may be added to the field, the nprs ID-r14 and the partB-r14 may specifically refer to the foregoing example of the first configuration information.
When the first message includes the SIB22-NB, an example in which first deployment information is carried in the SIB22-NB is as follows:

```
    DL-CarrierConfigCommon-NB-r14 ::=   SEQUENCE {

        dl-CarrierFreq-r14              CarrierFreq-NB-r13,

        downlinkBitmapNonAnchor-r14             CHOICE {

            ...

        },

        dl-GapNonAnchor-r14                  CHOICE {

            ...

        },

        inbandCarrierInfo-r14               SEQUENCE {

            ...

        }   OPTIONAL,        -- Cond non-anchor-inband

        nrs-PowerOffsetNonAnchor-r14            ENUMERATED {dB-12, dB-10, dB-8, dB-6,
```

dB-4, dB-2, dB0, dB3}    DEFAULT dB0,

nprsID-r14                 INTEGER (0..4095)     OPTIONAL,    -- Cond NPRS-ID

OTDOA-partB     partB-r14              OPTIONAL,

...

}

As described in the foregoing program procedure, that is, the first deployment information is carried in the DL-CarrierConfigCommon-NB-r14 field, and the information elements nprs ID-r14 and partB-r14 may be added to the field, the nprs ID-r14 and the partB-r14 may specifically refer to the foregoing example of the first configuration information.

The foregoing describes in detail the methods in the embodiments of this application. The following provides apparatuses in the embodiments of this application.

FIG. 6 is a schematic structural diagram of a terminal and a network device according to an embodiment of this application.

As shown in FIG. 6, the terminal includes a receiving unit 601 and a demodulation unit 602.

The receiving unit 601 is configured to receive a first message sent by a network device. The first message carries first configuration information, the first configuration information indicates a resource location configured for a positioning reference signal PRS on a downlink resource, and a resource on the downlink resource other than the resource occupied by the PRS is used to carry to-be-demodulated data.

The demodulation unit 602 is configured to demodulate the to-be-demodulated data based on the first configuration information. When demodulating data carried on the downlink resource, the terminal skips the resource occupied by the PRS.

As shown in FIG. 6, the terminal includes a processing unit 701 and a sending unit 702.

The processing unit 701 is configured to determine a first message.

The sending unit 702 is configured to send the first message to a terminal. The first message carries first configuration information. The first configuration information indicates a resource location configured for a positioning reference signal PRS on a downlink resource. A resource on the downlink resource other than the resource occupied by the PRS is used to carry to-be-demodulated data. The first configuration information is used by the terminal to demodulate the to-be-demodulated data based on the first configuration information. When demodulating data carried on the downlink resource, the terminal skips the resource occupied by the PRS.

In a possible implementation, the first message includes one or more of the following: a system message SIB2 or a system message SIB22.

In a possible implementation, if the downlink resource includes a physical resource block PRB of an anchor carrier in a plurality of carriers, the first message includes the system message SIB2; or if the downlink resource includes a PRB of a non-anchor carrier in a plurality of carriers, the first message includes the system message SIB22.

In an NB-IoT scenario, the SIB2 may be an SIB2-NB, and the SIB22 may be an SIB22-NB.

In a possible implementation, the first message is sent to the terminal by the network device when the network device is configured to be in a second mode, and in the second mode, the resource on the downlink resource other than the resource occupied by the PRS is used to carry the to-be-demodulated data.

It should be noted that for implementation of the units in the terminal and the network device described in FIG. 6, refer to corresponding descriptions in the method embodiment shown in FIG. 5. Details are not described herein again.

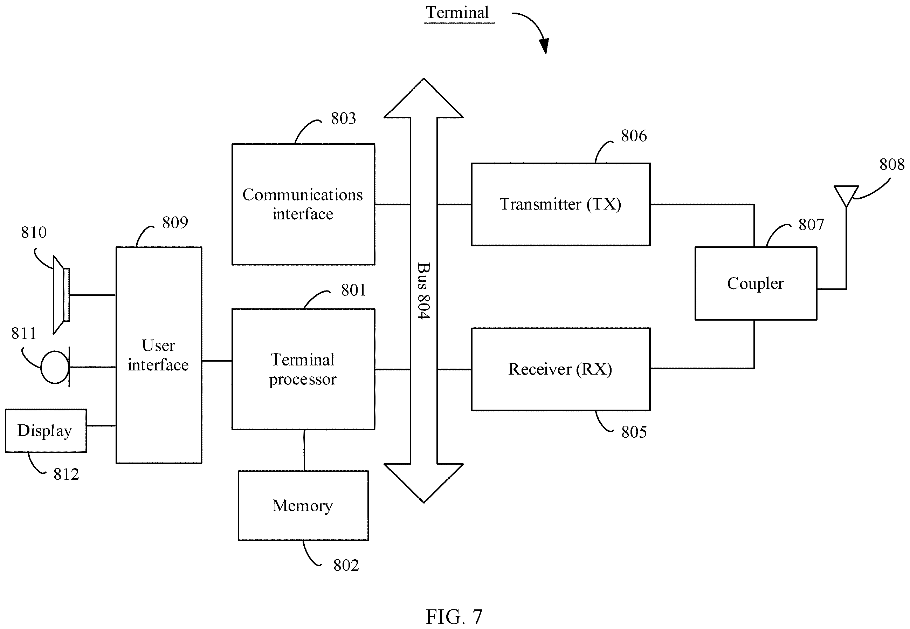

FIG. 7 is a schematic structural diagram of another terminal according to an embodiment of this application. As shown in FIG. 7, the terminal may include: one or more terminal processors 801, a memory 802, a communications interface 803, a receiver 805, a transmitter 806, a coupler 807, an antenna 808, a user interface 809, and an input/output module (including an audio input/output module 810, a key input module 811, a display 812, and the like). These components may be connected by using a bus 804 or in another manner. In FIG. 2, an example in which the components are connected by using the bus is used.

The communications interface 803 may be used for communication between the terminal and another communications device, for example, a network device. Specifically, the network device may be the network device shown in FIG. 1, or may be the base station shown in FIG. 2 and FIG. 3. Specifically, the communications interface 803 may be a long term evolution (LTE) (4G) communications interface, or may be a 5G communications interface or a future new radio communications interface. Not limited to a wireless communications interface, the terminal may be further configured with a wired communications interface 803, for example, a local access network (local access network, LAN) interface.

The transmitter 806 may be configured to perform transmission processing, for example, signal modulation, on a signal output by the terminal processor 801. The receiver 805 may be configured to perform reception processing, for example, signal demodulation, on a mobile communication signal received by the antenna 808. In some embodiments of this application, the transmitter 806 and the receiver 805 may be considered as a wireless modem. The terminal may include one or more transmitters 806 and one or more receivers 805. The antenna 808 may be configured to convert electromagnetic energy in a transmission line into an electromagnetic wave in free space, or convert an electromagnetic wave in free space into electromagnetic energy in a transmission line. The coupler 807 is configured to split the mobile communication signal received by the antenna 808 into a plurality of signals, and allocate the plurality of signals to the plurality of receivers 805.

In addition to the transmitter 806 and the receiver 805 shown in FIG. 2, the terminal device may further include another communications component, for example, a GPS module, a bluetooth (bluetooth) module, or a wireless fidelity (wireless fidelity, Wi-Fi) module. Not limited to the foregoing described wireless communication signal, the terminal may further support another wireless communication signal, for example, a satellite signal or a short-wave signal. Not limited to wireless communication, the terminal may be further configured with a wired network interface (for example, a LAN interface) to support wired communication.

The input/output module may be configured to implement interaction between the terminal and a user/an external environment, and may mainly include the audio input/output module 810, the key input module 811, the display 812, and the like. Specifically, the input/output module may further include a camera, a touchscreen, a sensor, and the like. Each input/output module communicates with the terminal processor 801 through the user interface 809.

The memory 802 is coupled to the terminal processor 801, and is configured to store various software programs and/or a plurality of sets of instructions. Specifically, the memory 802 may include a high-speed random access memory, and may further include a non-volatile memory, for example, one or more disk storage devices, a flash memory device, or another non-volatile solid-state storage device. The memory 802 may store an operating system (which is referred to as a system below), for example, an embedded operating system such as ANDROID, IOS, WINDOWS, or LINUX. The memory 802 may further store a network communication program, and the network communication program may be configured to communicate with one or more additional devices, one or more terminals, and one or more network devices. The memory 802 may further store a user interface program. The user interface program may vividly display content of an application program by using a graphical operation interface, and receive, by using input controls such as a menu, a dialog box, and a button, a control operation performed by a user on the application program.

In some embodiments of this application, the memory 802 may be configured to store a program for implementing, on a terminal side, the data transmission method provided in one or more embodiments of this application. For implementation of the data transmission method provided in one or more embodiments of this application, refer to the embodiment described in FIG. 5.

The terminal processor 801 may be configured to read and execute a computer-readable instruction. Specifically, the terminal processor 801 may be configured to: invoke a program stored in the memory 812, for example, a program for implementing, on the terminal side, the data transmission method provided in one or more embodiments of this application, and execute an instruction included in the program.

It may be understood that the terminal may be a terminal in the network system in the application scenario shown in FIG. 1, and may be implemented as a mobile device, a mobile station (mobile station), a mobile unit (mobile unit), a wireless unit, a remote unit, a user agent, a mobile client, or the like.

It should be noted that the terminal shown in FIG. 7 is merely an implementation of the embodiments of this application. In actual application, the terminal may further include more or fewer components. This is not limited herein.

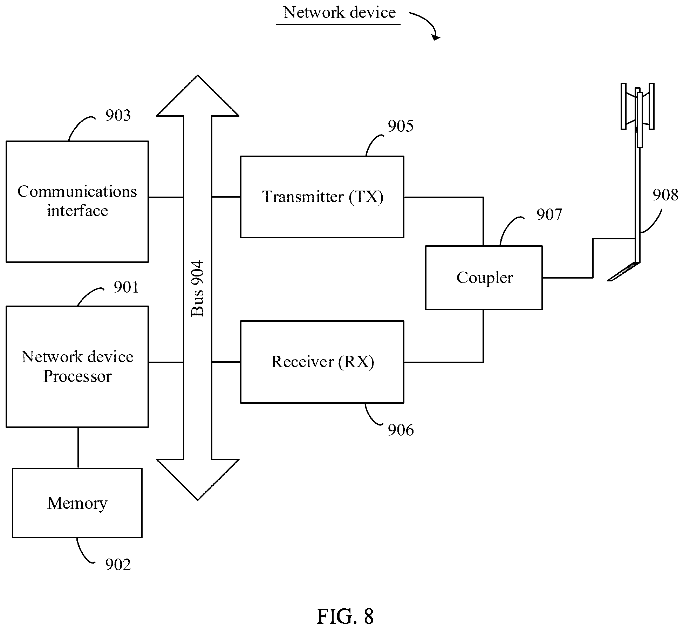

FIG. 8 is a schematic structural diagram of a network device according to an embodiment of this application. As shown in FIG. 8, the network device may include: one or more network device processors 901, a memory 902, a communications interface 903, a transmitter 905, a receiver 906, a coupler 907, and an antenna 908. These components may be connected by using a bus 904 or in another manner. In FIG. 8, an example in which the components are connected by using the bus is used.

The communications interface 903 may be used for communication between the network device and another communications device, for example, a terminal or another network device. Specifically, the terminal may be the terminal shown in FIG. 7. Specifically, the communications interface 903 maybe a long term evolution (LTE) (4G) communications interface, or may be a 5G communications interface or a future new radio communications interface. In addition to a wireless communications interface, the network device may further provided with a wired communications interface 903 to support wired communication. For example, a backhaul connection between one network device and another network device may be a wired communication connection.

The transmitter 905 may be configured to perform transmission processing, for example, signal modulation, on a signal output by the network device processor 901. The receiver 906 may be configured to perform reception processing on a mobile communication signal received by the antenna 908, for example, signal demodulation. In some embodiments of this application, the transmitter 905 and the receiver 906 may be considered as a wireless modem. The network device may include one or more transmitters 905 and one or more receivers 906. The antenna 908 may be configured to convert electromagnetic energy in a transmission line into an electromagnetic wave in free space, or convert an electromagnetic wave in free space into electromagnetic energy in a transmission line. The coupler 907 may be configured to split the mobile communication signal into a plurality of signals, and allocate the plurality of signals to the plurality of receivers 906.

The memory 902 is coupled to the network device processor 901, and is configured to store various software programs and/or a plurality of sets of instructions. Specifically, the memory 902 may include a high-speed random access memory, and may further include a non-volatile memory, for example, one or more disk storage devices, a flash memory device, or another non-volatile solid-state storage device. The memory 902 may store an operating system (which is briefly referred to as a system below), for example, an embedded operating system such as uCOS, VxWorks, or RTLinux. The memory 902 may further store a network communication program, and the network communication program may be configured to communicate with one or more additional devices, one or more terminal devices, and one or more network devices.

The network device processor 901 may be configured to manage a radio channel, establish and disconnect a call and a communication link, and provide cell handover control for a user in a local control area. Specifically, the network device processor 901 may include: an administration module/communication module (administration module/communication module, AM/CM) (a center for speech channel switching and information exchange), a basic module (basic module, BM) (configured to implement call processing, signaling processing, radio resource management, radio link management, and circuit maintenance functions), a transcoder and submultiplexer (transcoder and submultiplexer, TCSM) (configured to implement multiplexing/demultiplexing and transcoding functions), and the like.

In this embodiment of this application, the network device processor 901 may be configured to read and execute a computer-readable instruction. Specifically, the network device processor 901 may be configured to: invoke a program stored in the memory 902, for example, a program for implementing, on the network device side, the data transmission method provided in one or more embodiments of this application, and execute an instruction included in the program.

It may be understood that the network device may be the network device in the network system in the application scenario shown in FIG. 1, and may be implemented as a base transceiver station, a wireless transceiver, a basic service set (BSS), an extended service set (ESS), a NodeB, an eNodeB, an access point, a TRP, or the like.

It should be noted that the network device shown in FIG. 8 is merely an implementation of the embodiments of this application. In actual application, the network device may further include more or fewer components. This is not limited herein.

An embodiment of this application further provides a computer-readable storage medium. The computer-readable storage medium stores an instruction. When the instruction is run on a computer or a processor, the computer or the processor is enabled to perform one or more steps according to any one of the foregoing methods. When component modules of the signal processing apparatus are implemented in a form of a software functional unit and sold or used as an independent product, the component modules may be stored in the computer-readable storage medium.

All or some of the foregoing embodiments may be implemented through software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedure or functions according to the embodiments of this application are completely or partially generated. The computer may be a general purpose computer, a dedicated computer, a computer network, or other programmable apparatuses. The computer instruction may be stored in a computer-readable storage medium, or may be transmitted by using the computer-readable storage medium. The computer instruction may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

A person of ordinary skill in the art may understand that all or some of the procedures of the methods in the embodiments may be implemented by a computer program instructing relevant hardware. The program may be stored in a computer-readable storage medium. When the program is executed, the procedures of the methods in the embodiments may be performed. The foregoing storage medium includes: any medium that can store program code, such as a ROM, a random access memory RAM, a magnetic disk, or an optical disc.

**Claims**

1. A data transmission method, wherein the method comprises:

   receiving, by a terminal, a first message sent by a network device, wherein the first message carries first configuration information, the first configuration information indicates a resource location configured for a positioning reference signal PRS on a downlink resource, and a resource on the downlink resource other than the resource occupied by the PRS is used to carry to-be-demodulated data; and

   demodulating, by the terminal, the to-be-demodulated data based on the first configuration information, wherein when demodulating data carried on the downlink resource, the terminal skips the resource occupied by the PRS.

2. The method according to claim 1, wherein the first message comprises one or more of the following: a system message SIB2 or a system message SIB22.

3. The method according to claim 2, wherein if the downlink resource comprises a physical resource block PRB of an anchor carrier in a plurality of carriers, the first message comprises the system message SIB2; or if the downlink resource comprises a PRB of a non-anchor carrier in a plurality of carriers, the first message comprises the system message SIB22.

4. The method according to any one of claims 1 to 3, wherein the first message is sent to the terminal by the network device when the network device is configured to be in a second mode, and in the second mode, the resource on the downlink resource other than the resource occupied by the PRS is used to carry the to-be-demodulated data.

5. A data transmission method, wherein the method comprises:
   sending, by a network device, a first message to a terminal, wherein the first message carries first configuration information, the first configuration information indicates a resource location configured for a positioning reference signal PRS on a downlink resource, a resource on the downlink resource other than the resource occupied by the PRS is used to carry to-be-demodulated data, the first configuration information is used by the terminal to demodulate the to-be-demodulated data based on the first configuration information, and when demodulating data carried on the downlink resource, the terminal skips the resource occupied by the PRS.

6. The method according to claim 4, wherein the first message is one or more of the following: a system message SIB2 or a system message SIB22.

7. The method according to claim 6, wherein if the downlink resource comprises a physical resource block PRB of an anchor carrier in a plurality of carriers, the first message comprises the system message SIB2; or if the downlink resource comprises a PRB of a non-anchor carrier in a plurality of carriers, the first message comprises the system message SIB22.

8. The method according to any one of claims 5 to 7, wherein the sending, by a network device, a first message to a terminal comprises:
   in a second mode, sending, by the network device, the first message to the terminal, wherein in the second mode, the resource on the downlink resource other than the resource occupied by the PRS is used to carry the to-be-demodulated data.

9. A terminal, comprising a receiving unit and a demodulation unit, wherein
   the receiving unit is configured to receive a first message sent by a network device, wherein the first message carries first configuration information, the first configuration information indicates a resource location configured for a positioning reference signal PRS on a downlink resource, and a resource on the downlink resource other than the resource occupied by the PRS is used to carry to-be-demodulated data; and
   the demodulation unit is configured to demodulate the to-be-demodulated data based on the first configuration information, wherein when demodulating data carried on the downlink resource, the terminal skips the resource occupied by the PRS.

10. The terminal according to claim 1, wherein the first message comprises one or more of the following: a system message SIB2 or a system message SIB22.

11. The terminal according to claim 10, wherein if the downlink resource comprises a physical resource block PRB of an anchor carrier in a plurality of carriers, the first message comprises the system message SIB2; or if the downlink resource comprises a PRB of a non-anchor carrier in a plurality of carriers, the first message comprises the system message SIB22.

12. The terminal according to any one of claims 9 to 11, wherein the first message is sent to the terminal by the network device when the network device is configured to be in a second mode, and in the second mode, the resource on the downlink resource other than the resource occupied by the PRS is used to carry the to-be-demodulated data.

13. A network device, comprising a processing unit and a sending unit, wherein
the processing unit is configured to determine a first message; and
the sending unit is configured to send the first message to a terminal, wherein the first message carries first configuration information, the first configuration information indicates a resource location configured for a positioning reference signal PRS on a downlink resource, a resource on the downlink resource other than the resource occupied by the PRS is used to carry to-be-demodulated data, the first configuration information is used by the terminal to demodulate the to-be-demodulated data based on the first configuration information, and when demodulating data carried on the downlink resource, the terminal skips the resource occupied by the PRS.

14. The network device according to claim 13, wherein the first message is one or more of the following: a system message SIB2 or a system message SIB22.

15. The network device according to claim 14, wherein if the downlink resource comprises a physical resource block PRB of an anchor carrier in a plurality of carriers, the first message comprises the system message SIB2; or if the downlink resource comprises a PRB of a non-anchor carrier in a plurality of carriers, the first message comprises the system message SIB22.

16. The network device according to any one of claims 13 to 15, wherein in a second mode, the sending unit is configured to send the first message to the terminal, and in the second mode the resource on the downlink resource other than the resource occupied by the PRS is used to carry the to-be-demodulated data.

FIG. 1

**100**

| | | | | | | |
|---|---|---|---|---|---|---|
| **101** | | **102** | | **103** | | **105** |

Terminal — · — Base station —— Mobility management entity —— Gateway mobile location center

**104**

Evolved serving mobile location center

FIG. 2

| Terminal | Base station | Mobility management entity | Evolved serving mobile location center | Gateway mobile location center |
|---|---|---|---|---|

S101a. Terminal originated location request

S101b. Terminal terminated location request

S101c. Network induced location request

S102. Location service request

S103. Positioning capability information

S104. Determine a positioning method

S105. Downlink observed time difference of arrival assistance data request

S106. Downlink observed time difference of arrival assistance data response

S107. Downlink observed time difference of arrival assistance data

S108. Location request

S109. Measurement result

S110. Positioning result

S111a. Positioning result

S111b. Positioning result

S111c. Positioning result

FIG. 3

FIG. 4

| Network device | | Terminal |
|---|---|---|

| S201. Determine to use a second mode |
|---|

S202. First message →

| S203. When data demodulation is performed on a downlink resource, remove a PRS based on first configuration information, and perform downlink demodulation on to-be-demodulated data |
|---|

**FIG. 5**

701
702

| Processing unit | — | Sending unit |
|---|---|---|

Network device

602
601

| Demodulation unit | — | Receiving unit |
|---|---|---|

Terminal

**FIG. 6**

FIG. 7

EP 3 833 082 A1

Network device

FIG. 8

## INTERNATIONAL SEARCH REPORT

| International application No. |
| --- |
| **PCT/CN2018/102284** |

**A. CLASSIFICATION OF SUBJECT MATTER**

H04W 24/02(2009.01)i

According to International Patent Classification (IPC) or to both national classification and IPC

**B. FIELDS SEARCHED**

Minimum documentation searched (classification system followed by classification symbols)

H04W; H04Q; H04L

Documentation searched other than minimum documentation to the extent that such documents are included in the fields searched

Electronic data base consulted during the international search (name of data base and, where practicable, search terms used)

WPI, EPODOC, CNPAT, CNKI, 3GPP: 定位参考信号, 窄带定位参考信号, 配置, 资源, 位置, 解调, 调制, 承载, 跳过, PRS, NPRS, configure, configuration, resource, position, demodulation, modulation, bearer, jump

**C. DOCUMENTS CONSIDERED TO BE RELEVANT**

| Category* | Citation of document, with indication, where appropriate, of the relevant passages | Relevant to claim No. |
| --- | --- | --- |
| A | CN 103220802 A (ZTE CORPORATION) 24 July 2013 (2013-07-24) description, paragraphs [0044]-[0054], and figure 1 | 1-16 |
| A | CN 107113569 A (INTEL IP CORPORATION) 29 August 2017 (2017-08-29) entire document | 1-16 |
| A | CN 103875219 A (HUAWEI TECHNOLOGIES CO., LTD.) 18 June 2014 (2014-06-18) entire document | 1-16 |
| A | WO 2017142725 A2 (QUALCOMM INCORPORATION) 24 August 2017 (2017-08-24) entire document | 1-16 |
| A | US 9955295 B1 (SPRINT SPECTRUM L.P.) 24 April 2018 (2018-04-24) entire document | 1-16 |
| A | ERICSSON. "3GPP TSG-RAN2 Meeting #97 R2-1701042" *Email discussion report [96#51][LTE/eNB-IoT] Positioning procedures*, 17 February 2017 (2017-02-17), entire document | 1-16 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **11 April 2019** | **28 April 2019** |

| Name and mailing address of the ISA/CN | Authorized officer |
| --- | --- |
| **National Intellectual Property Administration, PRC (ISA/ CN)** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2018/102284** |

### C. DOCUMENTS CONSIDERED TO BE RELEVANT

| Category* | Citation of document, with indication, where appropriate, of the relevant passages | Relevant to claim No. |
| --- | --- | --- |
| A | QUALCOMM INCORPORATED. "3GPP TSG RAN WG1 Meeting #92bis R1-1804896" *On NPRS performance*, 20 April 2018 (2018-04-20), entire document | 1-16 |

Form PCT/ISA/210 (second sheet) (January 2015)

**INTERNATIONAL SEARCH REPORT**
**Information on patent family members**

| International application No. |
|---|
| **PCT/CN2018/102284** |

| Patent document cited in search report | | | Publication date (day/month/year) | Patent family member(s) | | | Publication date (day/month/year) |
|---|---|---|---|---|---|---|---|
| CN | 103220802 | A | 24 July 2013 | EP | 2804436 | A1 | 19 November 2014 |
| | | | | WO | 2013107319 | A1 | 25 July 2013 |
| | | | | JP | 2015509330 | A | 26 March 2015 |
| | | | | US | 2014369293 | A1 | 18 December 2014 |
| CN | 107113569 | A | 29 August 2017 | WO | 2016122761 | A1 | 04 August 2016 |
| | | | | EP | 3251235 | A1 | 06 December 2017 |
| | | | | KR | 20170107975 | A | 26 September 2017 |
| | | | | US | 2017374638 | A1 | 28 December 2017 |
| CN | 103875219 | A | 18 June 2014 | JP | 2017505023 | A | 09 February 2017 |
| | | | | US | 2016285602 | A1 | 29 September 2016 |
| | | | | KR | 20160093691 | A | 08 August 2016 |
| | | | | EP | 3068179 | A1 | 14 September 2016 |
| | | | | CA | 2932945 | A1 | 18 June 2015 |
| | | | | WO | 2015085563 | A1 | 18 June 2015 |
| WO | 2017142725 | A2 | 24 August 2017 | US | 2017238298 | A1 | 17 August 2017 |
| | | | | BR | 112018016661 | A2 | 26 December 2018 |
| | | | | KR | 20180114042 | A | 17 October 2018 |
| | | | | TW | 201731311 | A | 01 September 2017 |
| | | | | CN | 108702275 | A | 23 October 2018 |
| | | | | AU | 2017221184 | A1 | 02 August 2018 |
| | | | | JP | 2019505145 | A | 21 February 2019 |
| | | | | EP | 3417567 | A2 | 26 December 2018 |
| US | 9955295 | B1 | 24 April 2018 | US | 10219108 | B1 | 26 February 2019 |

Form PCT/ISA/210 (patent family annex) (January 2015)